Europäisches Patentamt

European Patent Office

Office européen des brevets

(19)

(11) Numéro de publication : **0 214 208**
**B1**

(12) # FASCICULE DE BREVET EUROPÉEN

(45) Date de publication du fascicule du brevet :
**21.12.88**

(21) Numéro de dépôt : **86901412.6**

(22) Date de dépôt : **21.02.86**

(86) Numéro de dépôt international :
**PCT/FR 86/00054**

(87) Numéro de publication internationale :
**WO/8605173 (12.09.86 Gazette 86/20)**

(51) Int. Cl.⁴ : **C 03 C 17/00, B 05 B 7/08**

(54) **DISPOSITIF DE PULVERISATION LINEAIRE.**

(30) Priorité : **06.03.85 FR 8503280**

(43) Date de publication de la demande :
**18.03.87 Bulletin 87/12**

(45) Mention de la délivrance du brevet :
**21.12.88 Bulletin 88/51**

(84) Etats contractants désignés :
**AT BE CH DE FR GB IT LI LU NL SE**

(56) Documents cités :
**FR-A- 2 288 068
FR-A- 2 542 636
FR-A- 2 542 637**

(73) Titulaire : **BERTIN & CIE
Zone Industrielle Boîte postale 3
F-78373 Plaisir Cedex (FR)**

(72) Inventeur : **VIANNAY, Stéphane, Georges, Jean-Marie
3, impasse du Mail Les Maisons du Manet
Voisin-le-Bretonneux F-78190 Trappes (FR)**
Inventeur : **ROTH, Bernard, Marie
164 quinto, Rue d'Aguesseau
F-92100 Boulogne-Billancourt (FR)**
Inventeur : **MIRIGAY, Solange, Marie, Virginie
546, avenue Roger Salengro
F-92370 Chaville (FR)**
Inventeur : **CHASTANG, Georges, Jean, Baptiste
16, allée du Forgeron Coignières
F-78310 Maurepas (FR)**

(74) Mandataire : **Colas, Jean-Pierre et al
Cabinet de Boisse 37, avenue Franklin D. Roosevelt
F-75008 Paris (FR)**

EP 0 214 208 B1

Jouve, 18, rue St-Denis, 75001 Paris, France

## Description

L'invention concerne un dispositif de pulvérisation linéaire comportant un corps creux, alimenté en gaz sous pression, dans lequel est disposé un conduit d'amenée de liquide débouchant, longitudinalement, par au moins une ouverture entre deux rangées d'orifices ou fentes de passage du gaz sous pression.

On connaît du brevet français N° 2 288 068 (BOUSSOIS) un dispositif de pulvérisation formant un rideau sensiblement continu de gouttelettes. Un gaz sous pression assure la pulvérisation d'un liquide qui est introduit par une première fente à la partie supérieure d'une chambre de pulvérisation dans laquelle débouchent à la partie inférieure des orifices d'amenée du gaz.

Le mélange gaz-liquide passe dans une deuxième fente de pulvérisation ouverte en face de la surface à traiter. Selon la forme de réalisation représentée, le dispositif est constitué de deux pièces en U, assemblées par leur branche transversale. Le canal d'amenée d'eau et la première fente sont obtenus par usinage dans le dos de la branche transversale de chaque paire d'un demi-profil.

L'ouverture des pièces en U est fermée par une plaque d'étanchéité pour former des chambres longitudinales dans lesquelles est amené le gaz sous pression. Des canaux obliques traversent les ailes du U pour amener le gaz sous pression dans la chambre de pulvérisation.

La largeur de la première fente d'amenée du liquide est réglée par interposition de cales entre les branches transversales des deux profilés.

On connaît également du brevet français N° 2 375 911 un pulvérisateur à jet bidimensionnel constitué d'un corps creux comportant une fente longitudinale, alimenté en gaz sous pression et, disposée à l'intérieur dudit corps creux, une rampe d'injection d'un liquide munie d'orifices de diamètre déterminé.

Une action sur la pression d'injection du liquide dans la chambre de pulvérisation ou dans le corps creux ne permet de modifier le débit du pulvérisateur que dans des limites très étroites. Une variation sensible du débit des pulvérisateurs décrits ne peut être obtenue que par changement du jeu de cales déterminant la largeur de la fente d'arrivée du liquide ou par changement des injecteurs de la rampe d'injection. Ces opérations ne peuvent être menées à bien que par arrêt de l'installation et démontage plus ou moins total des dispositifs de pulvérisation.

D'autres inconvénients des dispositifs connus apparaissent lors de leur utilisation pour de faibles débits qui exigent des fentes ou orifices étroits. Il s'agit en particulier du bouchage dû, soit au dépôt de certains corps dissous dans le liquide, soit à l'arrêt d'impuretés de dimensions supérieures à celles de la fente ou de l'orifice. Les diminutions de débit qui en résultent ne peuvent être suffisamment compensées par la pression d'introduction du liquide et nécessitent le démontage et le nettoyage relativement fréquents de l'installation.

L'invention propose la réalisation d'un dispositif de pulvérisation permettant des variations importantes du débit sans nécessiter ni l'arrêt de l'installation, ni le démontage des dispositifs, le débit de liquide n'étant limité que par les conduites d'alimentation de la rampe d'amenée d'eau.

Le dispositif selon l'invention est caractérisé en ce que le corps creux est formé de deux gaines séparées par au moins un dispositif pulvérisateur formant une trémie, l'extrémité étroite de la trémie comportant une tête de pulvérisation dirigée vers la surface de la pièce à traiter, ladite tête présentant dans le plan de symétrie du dispositif au moins une fente pour l'écoulement du liquide, et, de part et d'autre de ladite fente, une rangée d'ouvertures ou une fente pour le passage du gaz sous pression, et en ce qu'un tube d'amenée du liquide disposé parallèlement à l'extrémité large de la trémie comporte, dans le plan de symétrie du dispositif, des ouvertures pour l'écoulement direct ou indirect du liquide dans la trémie.

Avantageusement la largeur de la fente d'amenée du liquide est telle que l'écoulement du liquide ne nécessite pas de pression appréciable, de préférence également la largeur de fente ou d'ouvertures d'amenée de gaz est telle que le gaz nécessaire à la pulvérisation est amené à faible pression en amont des fentes ou ouvertures.

Ainsi la largeur de la fente d'amenée de liquide peut être du même ordre de grandeur que celle des fentes d'amenée de gaz (environ 2 à 3 fois plus grande, par exemple).

Les explications et figures données ci-après à titre d'exemple permettront de comprendre comment l'invention peut être réalisée.

La figure 1 représente en perspective un exemple de réalisation d'un dispositif de pulvérisation, avec jet dirigé vers le bas.

La figure 2 est une vue selon F de la figure 1, en coupe partielle.

La figure 3 est une vue en perspective d'un exemple de réalisation d'un dispositif de pulvérisation avec jet dirigé vers le haut.

La figure 4 est une vue en coupe selon IV-IV de la figure 3.

La figure 5 est une vue en perspective d'un élément pulvérisateur.

La figure 6 est une vue schématique d'un autre exemple de réalisation d'un pulvérisateur.

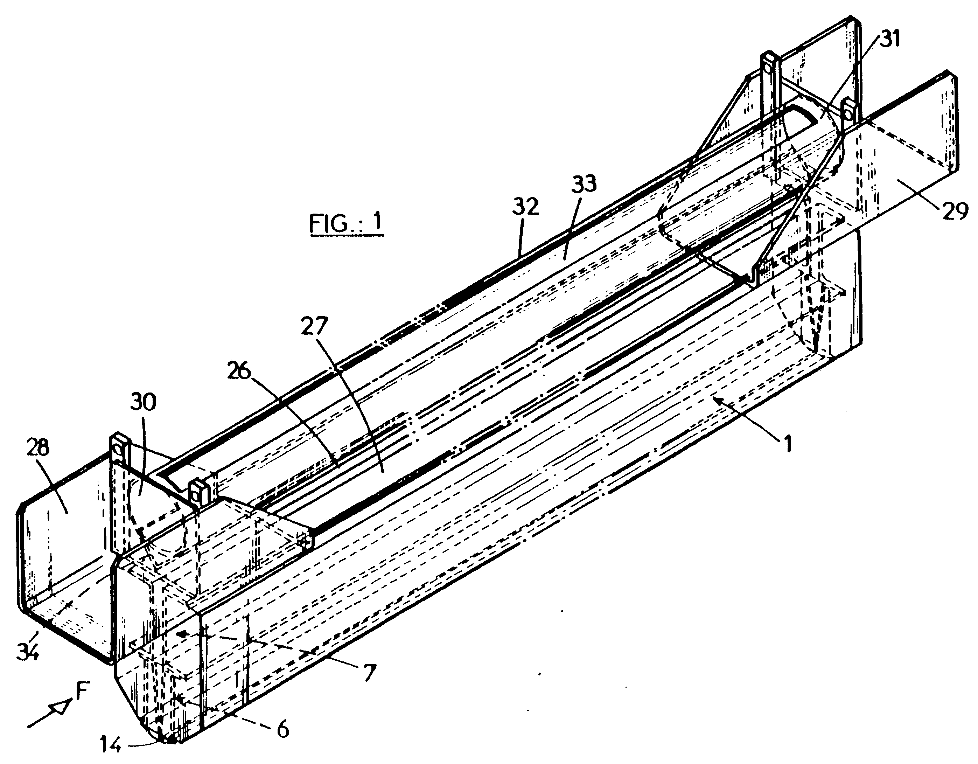

La figure 1 représente un dispositif de pulvérisation, selon une forme de réalisation de l'invention. Ce dispositif est plus particulièrement destiné à produire un jet laminaire dirigé vers le bas.

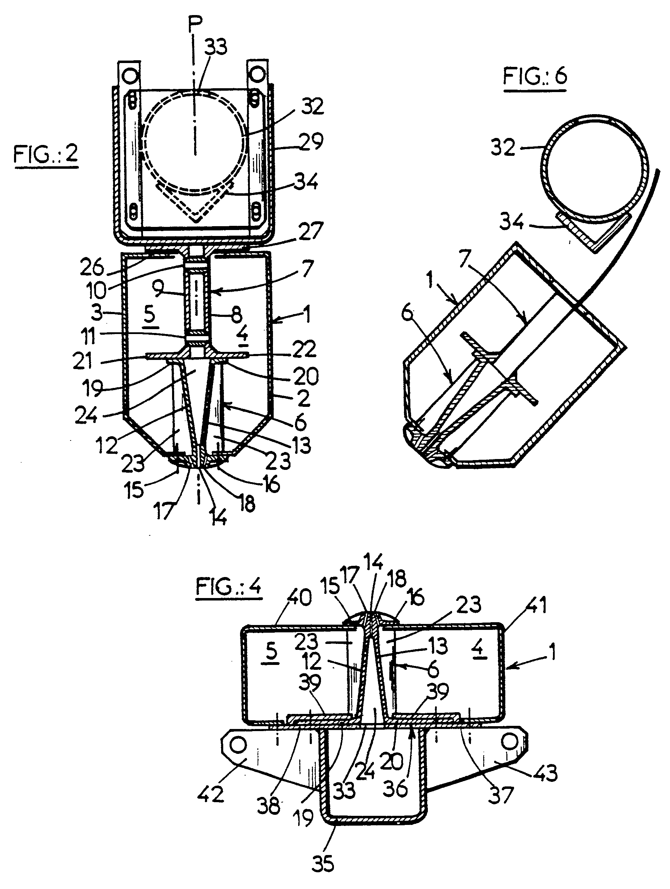

Le dispositif de pulvérisation (figures 1 et 2) comporte un corps creux 1 constitué de deux carters 2, 3 définissant deux gaines 4, 5, alimentées en gaz sous pression à l'une de leurs extrémités. Ces deux gaines entourent un dispositif pulvérisateur 6 et un conduit d'amenée de liquide 7.

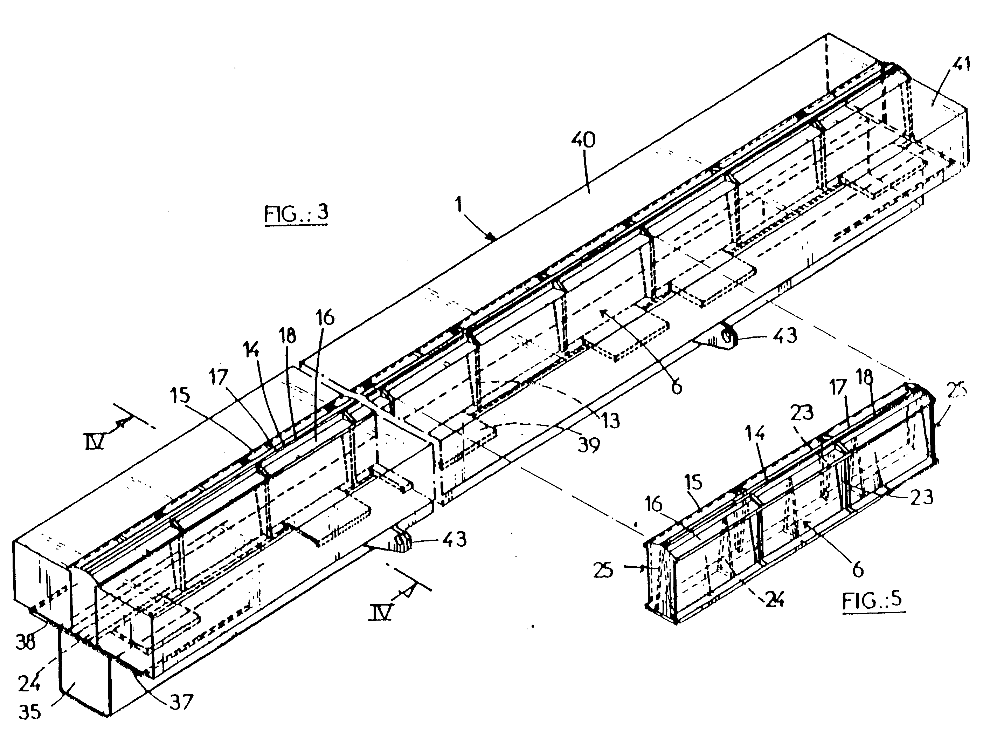

Le conduit d'amenée de liquide 7 est constitué, selon la réalisation représentée, par deux profilés 8, 9 de section en U, fixés dos à dos par l'intermédiaire d'entretoises 10, 11 laissant un passage de grande largeur. Les ailes inférieures des profilés supportent le dispositif pulvérisateur 6 constitué d'éléments tels que montrés figure 5. Ces éléments sont constitués, par exemple, par des pièces moulées. Les parois latérales convergentes 12, 13 forment une trémie dont la partie étroite présente une fente continue ou discontinue 14 de largeur relativement grande (de l'ordre de 5 mm). Chaque bord de la fente 14 est munie vers l'extérieur d'un rebord 15, 16 sensiblement perpendiculaire au plan de symétrie longitudinal P. Les rebords 15, 16 sont percés de part en part par des ouvertures 17, 18 dont les axes sont dirigés obliquement vers le plan de symétrie P et concourrent en des points extérieurs situés en avant de la fente 14 alignés selon une droite parallèle à la sortie de la fente. Ces ouvertures se présentent sous forme de deux rangées de trous ou de fentes disposées, par exemple, symétriquement par rapport à l'axe de la fente 14, et destinées à diriger le gaz de pulvérisation sur le liquide s'écoulant de la fente 14.

La fente 14 et les rangées d'ouverture constituent une tête de pulvérisation dirigée vers la surface de la pièce à traiter.

La dimension des ouvertures et leur inclinaison dépendent de la largeur du jet que l'on désire obtenir et par conséquent de la largeur de la surface que l'on désire traiter. Cette largeur est d'ailleurs également fonction de la distance de la surface à la naissance du jet. De manière connue, il est possible d'obtenir un jet décentré par rapport au plan de symétrie du dispositif en donnant aux rangées d'ouvertures des inclinaisons différentes.

Les bords de la partie large de la trémie ou entrée sont pourvus, vers l'extérieur, de brides de fixation 19, 20 approximativement perpendiculaires au plan de symétrie P, qui participent à la fixation étanche de l'élément pulvérisateur 6 sur les ailes inférieures 21, 22 du conduit d'amenée de liquide 7.

La rigidité de l'élément pulvérisateur est assurée par des renforts 23 et 24, perpendiculaires au plan de symétrie P, qui sont prévus à l'extérieur de la trémie, sur les faces extérieures et s'étendant approximativement entre les rebords 15, 16 et les brides de fixation 19, 20 et à l'intérieur entre les faces intérieures de la trémie. Les extrémités 25 d'un élément (figure 5) sont fermées par lesdits renforts qui constituent les plaques d'assemblage des divers éléments constituant le dispositif pulvérisateur.

Le corps creux 1 est formé autour du dispositif pulvérisateur et du conduit d'amenée du liquide par fixation étanche des carters 2, 3 à la fois sur les ailes supérieures 26, 27 des profilés constituant le conduit 7 et sur les rebords 15, 16 du dispositif pulvérisateur.

L'ensemble constitué par les gaines et le dispositif pulvérisateur est maintenu à ses extrémités (figure 1) par des supports 28, 29 qui comportent à leur partie supérieure des passages 30, 31 dans lesquels sont fixées les extrémités d'un tube d'amenée de liquide 32. L'axe du tube est dans le plan de symétrie P de l'ensemble conduit d'amenée du liquide et trémie, disposé à la partie inférieure.

Le tube d'amenée de liquide 32 porte selon sa génératrice supérieure des ouvertures ou une fente longitudinale 33 de relativement grande largeur de manière à permettre au liquide, qui est introduit à au moins une extrémité dudit tube, de déborder et de s'écouler, uniformément, le long de la paroi du tube pour tomber au point le plus bas dans le conduit d'amenée du liquide 7 et de là, le long des parois de la trémie par la fente 14 à la rencontre des jets de gaz sous pression sortant des ouvertures 17, 18. Le liquide alimente donc le pulvérisateur 6 par gravité. Par suite des ouvertures ou fente 33 relativement larges, la distribution du liquide est obtenue par débordement et le débit peut en conséquence varier dans de très grandes proportions. Il est bien entendu que le débit maximum est celui que le conduit d'amenée 7 peut laisser écouler.

Le liquide ruisselle sur les parois intérieures de la trémie. Avantageusement la largeur de la fente 14 est telle qu'il n'y a pas rétention de liquide ; on obtient donc un arrêt instantané de la pulvérisation dès l'arrêt d'alimentation du tube d'amenée de liquide 32, par exemple par manoeuvre d'une vanne d'alimentation non représentée.

Le gaz, sortant sous pression des orifices ou fentes 17, 18, produit un effet d'aspiration sur le liquide s'écoulant de la fente 14, cet effet étant d'autant plus important que la vitesse des jets est plus grande et par conséquent que la pression du gaz dans les gaines 4, 5 est plus grande. Cette aspiration aura pour effet d'augmenter légèrement le débit maximum du conduit d'amenée de liquide et permettra ainsi son alimentation par un débit du tube d'amenée d'eau 32 supérieur à celui qui serait normalement accepté sans aspiration.

Afin d'éviter le décollement de la lame d'eau des parois du tube d'amenée, principalement au voisinage de la zone cylindrique opposée à celle de déversement, il est prévu un guide 34 qui forme, à la surface inférieure, un profil évolutif en forme de dièdre dont l'arête est disposée dans le plan de symétrie vertical P.

Par suite de la disposition des ouvertures ou de la fente selon la génératrice supérieure du tube d'amenée de liquide, il est possible d'intervenir sur le débit par obturation totale ou partielle d'une ou de plusieurs portions de la fente. Le jet laminaire obtenu à la sortie du pulvérisateur présentera alors un débit variable selon sa longueur en fonction du débit de la portion correspondante du tube d'amenée du liquide.

Le pulvérisateur peut être incliné de façon à assurer une pulvérisation dans des directions allant de la direction verticale de haut en bas jusqu'à la direction horizontale. un canal peut permettre de guider le liquide du tube d'amenée de liquide vers l'intérieur de la trémie (figure 6).

La figure 3 représente un dispositif de pulvérisation avec jet dirigé vers le haut. La réalisation de ce dispositif présente quelques variantes de disposition des différents éléments.

Les éléments pulvérisateurs 6 formant trémie sont en tous points semblables à ceux décrits dans le précédent dispositif et ne seront pas décrits plus avant.

Le tube d'amenée de liquide 35 (figures 3 et 4) est constitué d'un profilé rectangulaire, dont une des faces 36 est prolongée longitudinalement et dans son plan par deux ailes 37, 38. Cette même face porte en son milieu une fente ou des orifices de relativement grande largeur. La face 36 et les ailes 37, 38 supportent les éléments pulvérisateurs 6 dont les brides de fixation 19, 20 sont maintenues par des brides d'appui 39.

De préférence chaque élément 6 est maintenu à ses extrémités et de chaque côté par des brides d'appui 39 qui permettent la libre dilatation de l'élément, qui dans certains cas d'utilisation est soumis à des températures relativement élevées.

Comme dans l'exemple du dispositif précédemment décrit, deux carters 40, 41 sont fixés d'une part sur les ailes 37, 38 et d'autre part sur les rebords 15, 16 de l'élément pulvérisateur, pour former deux gaines 5, 4 qui sont alimentées en gaz comprimé.

Le dispositif de pulvérisation forme une rampe qui est soutenue au moins à ses extrémités par des équerres 42, 43 soudées sur le tube d'amenée de liquide 35 et sur les ailes 19, 20.

Le mode de fonctionnement du dispositif à jet dirigé vers le haut est semblable à celui du dispositif précédemment décrit.

Le liquide remplissant le tube d'amenée 35 est mis sous une légère pression afin qu'il remplisse totalement la trémie du pulvérisateur 6 et déborde à la sortie de la fente de pulvérisation. Les jets de gaz sous pression issus des orifices ou fentes 17, 18 entraînent le liquide en le pulvérisant. Les jets de gaz créent une aspiration qui empêche le liquide sortant de la fente 14 de s'écouler sous l'effet de la gravité. L'amenée du liquide à la sortie de pulvérisation se fait sous une très faible pression correspondant à la hauteur du liquide contenu dans la trémie.

Le pulvérisateur peut être incliné de façon à assurer une pulvérisation dans des directions allant de la direction verticale de bas en haut jusqu'à la direction horizontale.

Les dispositifs de pulvérisation selon l'invention présentent de nombreux avantages parmi lesquels :

- une répartition homogène de liquide selon la longueur du dispositif ;
- une alimentation en liquide à basse pression ;
- une grande largeur de la fente d'admission d'eau évitant les bouchages ;
- une séparation du circuit d'amenée de liquide du circuit de gaz au moins en ce qui concerne le dispositif à jet dirigé vers le haut, permettant d'éventuelles interventions sur le circuit de liquide sans démontage du circuit gaz ;
- une interchangeabilité des éléments pulvérisateurs, et la réalisation de dispositifs de longueur modulaire ;
- une fabrication des éléments en matériau adapté à leur utilisation.

Un exemple d'utilisation de tels dispositifs est donné par un système de traitement thermique de tôles comportant des dispositifs de pulvérisation à jet dirigé vers le bas et vers le haut permettant le traitement symétrique des tôles avec un réglage précis des conditions de refroidissement, la tôle passant entre deux ou plusieurs dispositifs.

Les conditions thermiques auxquelles sont soumis les dispositifs de pulvérisation nécessitent pour une bonne stabilité des éléments, leur réalisation en un matériau résistant aux hautes températures, tel que la fonte.

## Revendications

1. Dispositif de pulvérisation linéaire destiné en particulier au traitement de surface d'une pièce et comportant un corps creux alimenté en gaz sous pression, dans lequel est disposé un conduit d'amenée de liquide, débouchant longitudinalement, par au moins une ouverture, entre deux rangées d'orifices ou fentes de passage du gaz sous pression, caractérisé en ce que le corps creux (1) est formé de deux gaines (4, 5) séparées par au moins un dispositif pulvérisateur (6) formant une trémie, l'extrémité étroite de la trémie comportant une tête de pulvérisation dirigée vers la surface de la pièce à traiter, ladite tête présentant dans le plan de symétrie (P) du dispositif au moins une fente (14) pour l'écoulement du liquide, et de part et d'autre de ladite fente une rangée d'ouvertures ou bien une fente (17, 18) pour le passage du gaz sous pression, et en ce qu'un tube d'amenée du liquide (32, 35) disposé parallèlement à l'extrémité large de la trémie comporte, dans le plan de symétrie (P) du dispositif, des ouvertures (33) pour l'écoulement direct ou indirect du liquide dans la trémie.

2. Dispositif selon la revendication 1, caractérisé en ce que la largeur de la fente (14) d'amenée du liquide est telle que l'écoulement de liquide ne nécessite pas de pression appréciable et que la largeur de fente ou d'ouverture (17, 18) d'amenée de gaz est telle que le gaz nécessaire à la pulvérisation est amené à faible pression en amont de cette fente ou ouverture (17, 18).

3. Dispositif selon la revendication 2, caractérisé en ce que la largeur de la fente (14) d'amenée de liquide reste du même ordre de grandeur que celle des fentes d'amenée du gaz.

4. Dispositif de pulvérisation avec jet dirigé vers le bas, selon l'une des revendications 1 à 3, caractérisé en ce que l'extrémité large de la trémie (6) est dirigée vers le haut, le tube d'amenée de liquide (32) étant disposé horizontalement et parallèlement à distances de l'extrémité large de la trémie, l'axe du tube étant dans le plan de symétrie (P) du dispositif, et en ce que les ouvertures (33) pour l'écoulement du liquide sont prévues selon la génératrice supérieure du tube, le liquide ruissellant ainsi sur les parois intérieures de la trémie.

5. Dispositif selon la revendication 4, caractérisé en ce que la largeur de la fente (14) d'amenée du liquide est telle qu'il n'y ait pas rétention de liquide, de manière à obtenir l'arrêt quasi instantané de la pulvérisation dès l'arrêt d'alimentation du tube d'amenée de liquide (32).

6. Dispositif selon la revendication 4 ou 5, caractérisé en ce qu'il peut être incliné de façon à assurer une pulvérisation dans des directions allant de la direction verticale de haut en bas jusqu'à la direction horizontale, un canal pouvant être prévu pour guider le liquide du tube d'amenée du liquide (32) vers l'intérieur de la trémie.

7. Dispositif selon l'une des revendications 4 à 6, caractérisé en ce que le tube (32) d'amenée de liquide porte à sa partie inférieure un guide (34) présentant une arête disposée dans le plan de symétrie (P) du dispositif.

8. Dispositif selon l'une des revendications 4 à 7, caractérisé en ce qu'un conduit d'amenée de liquide (7) est fixé sur l'extrémité large de la trémie.

9. Dispositif de pulvérisation avec jet dirigé vers le haut, selon la revendication 1, caractérisé en ce que l'extrémité large de la trémie est dirigée vers le bas et fixée de façon étanche sur la surface supérieure du tube d'amenée de liquide (35) au-dessus des ouvertures (33) pour l'écoulement du liquide.

10. Dispositif selon la revendication 9, caractérisé en ce qu'il peut être incliné de façon à assurer une pulvérisation dans des directions allant de la direction verticale de bas en haut jusqu'à la direction horizontale.

11. Dispositif de pulvérisation selon l'une des revendications précédentes, caractérisé en ce que le dispositif pulvérisateur (6) est formé d'éléments moulés présentant des parois latérales convergentes (12, 13) formant une trémie dont la partie étroite présente une fente continue ou discontinue (14), les bords de la fente (14) sont munis d'un rebord (15, 16) percé par des ouvertures (17, 18) dont les axes dirigés obliquement vers le plan de symétrie (P) concourent en des points situés en avant de la fente (14) alignés selon une droite parallèle à la sortie de la fente (14) ; la partie large de la trémie porte vers l'extérieur des brides de fixation (19, 20) pour la fixation sur le conduit (7) ou le tube (35) d'amenée de liquide ; des renforts (23, 24) sont prévus, perpendiculairement au plan de symétrie (P) extérieurement sur les faces extérieures (12, 13) de la trémie entre les rebords (15, 16) de la tête de pulvérisation et les brides de fixation (19, 20) des bords de la partie large de la trémie et à l'intérieur entre les faces intérieures de la trémie ; des plaques d'assemblage (25) prévues aux extrémités de l'élément, ferment de manière étanche le dispositif pulvérisateur (6) et permettent l'assemblage avec des éléments adjacents pour constituer une rampe.

**Claims**

1. Linear-spraying device intended in particular for treating the surface of a component, comprising a hollow body which is supplied with pressurised gas and in which a liquid supply duct is arranged, which duct emerges longitudinally, with at least one opening, between two rows of orifices or slots through which the pressurised gas passes, characterized in that the hollow body (1) consists of two sleeves (4, 5) separated by at least one sprayer device (6) forming a funnel, the narrow end of the funnel having a spraying head directed towards the surface of the part to be treated, the said head having, in the plane of symmetry (P) of the device, at least one slot (14) through which the liquid is able to flow and, on either side of the said slot, a row of openings or else a slot (17, 18) through which the pressurised gas is able to pass, and in that a liquid supply tube (32, 35), which is arranged parallel in relation to the wide end of the funnel, has, in the plane of symmetry (P) of the device, openings (33) through which the liquid is able to flow directly or indirectly into the funnel.

2. Device according to claim 1, characterized in that the width of the liquid supply slot (14) is such that the liquid flow does not require any appreciable pressure and in that the width opening (17, 18) of the gas supply slot is such that the gas required for spraying is supplied at a low pressure upstream of this slot or opening (17, 18).

3. Device according to claim 2, characterized in that the width of the liquid supply slot (14) is of the same order of magnitude as that of the gas supply slots.

4. Spraying device with a downwards pointing jet, according to anyone of the claims 1 to 3, characterized in that the wide end of the funnel (6) is directed upwards, the liquid supply tube (32) being arranged horizontally and parallel, at a distance from the wide end of the funnel, the axis of the tube being in the plane of symmetry (P) of the device, and in that the openings (33) through which the liquid flows are provided along the upper generatrix of the tube, the liquid therefore trickling down the internal walls of the funnel.

5. Device according to claim 4, characterized in that the width of the liquid supply slot (14) is such that no liquid is retained, so that spraying stops almost immediately when the supply of the liquid supply tube (32) is interrupted.

6. Device according to claim 4 or 5, characterized in that it may be inclined so as to ensure spraying in directions ranging from the vertical direction from the top downwards, to the horizontal direction, it being possible to provide a channel in order to guide the liquid from the liquid supply tube (32) into the funnel.

7. Device according to anyone of claims 4 to 6, characterized in that the liquid supply tube (32) has, at the bottom, a guide (34) with an edge arranged in the plane of symmetry (P) of the device.

8. Device according to anyone of claims 4 to 7, characterized in that a liquid supply duct (7) is fixed to the wide end of the funnel.

9. Spraying device with an upwards pointing jet, according to claim 1, characterized in that the wide end of the funnel is directed downwards and fixed in a leakproof manner to the upper surface of the liquid supply tube (35) above the openings (33) through which the liquid flows.

10. Device according to claim 9, characterized in that it may be inclined so as to ensure spraying in directions ranging from the vertical direction, from the bottom upwards to the horizontal direction.

11. Spraying device according to anyone of the foregoing claims, characterized in that the sprayer device (6) consists of moulded elements which have converging side walls (12, 13) and form a funnel, the narrow part of which has a continuous or discontinuous slot (14), the edges of the slot (14) being provided with a lip (15, 16) perforated by openings (17, 18) the axes of which point obliquely towards the plane of symmetry (P) and converge at points which are located in front of the slot (14) and are aligned in a straight line parallel to the outlet of the slot (14) ; the wide part of the funnel carries, on the outside, fixing lugs (19, 20) for effecting fixing to the liquid supply duct (7) or tube (35) ; strengthening pieces (23, 24) are provided, perpendicularly to the plane of symmetry (P) and on the outside, on the external surfaces (12, 13) of the funnel between the lips (15, 16) of the spraying head and the lugs (19, 20) for fixing the edges of the wide part of the funnel and, on the inside, between the internal surfaces of the funnel ; assembly plates (25), which are provided at the ends of the element, seal the sprayer device (6) in a leakproof manner and permit assembly with adjacent elements so as to form a bar.

## Patentansprüche

1. Vorrichtung zum linearen Spritzen, insbesondere zum Behandeln einer Oberfläche eines Gegenstands, mit einem Hohlkörper, der mit einem Gas unter Druck versorgt wird und in dem eine Leitung für den Zulauf einer Flüssigkeit angeordnet ist, die in Längsrichtung durch mindestens eine Öffnung zwischen zwei Reihen von Durchgangsöffnungen oder -spalten für das unter Druck stehende Gas austritt, dadurch gekennzeichnet, daß der Hohlkörper (1) aus zwei Hüllrohren (4, 5) gebildet ist, die durch mindestens eine Spritzeinrichtung (6) getrennt sind, die einen Trichter bildet, wobei das enge Ende des Trichters einen gegen die Oberfläche des zu behandelnden Gegenstands gerichteten-Spritzkopf aufweist, der in der Symmetrieebene (P) der Vorrichtung mit mindestens einem Spalt (14) für den Austritt von Flüssigkeit versehen ist, sowie beiderseits des genannten Spalts eine Reihe von Öffnungen oder ein Spalt (17, 18) für den Durchgang von unter Druck stehendem Gas vorliegt, und daß ein Flüssigkeitszuleitungsrohr (32, 35), das parallel zum breiten Ende des Trichters in der Symmetrieebene (P) der Vorrichtung angeordnet ist, Öffnungen (33) für den direkten oder indirekten Austritt von Flüssigkeit in den Trichter aufweist.

2. Vorrichtung nach Anspruch 1, dadurch gekennzeichnet, daß die Breite des Spalts (14) der Flüssigkeitszuleitung derart bemessen ist, daß der Austritt der Flüssigkeit keinen nennenswerten Druck erfordert, und daß die Breite des Spalts oder der Öffnung (17, 18) für den Austritt des Gases derart bemessen ist, daß das zum Spritzen benötigte Gas oberhalb des Spalts oder der Öffnung (17, 18) unter einem schwachen Druck zugeführt wird.

3. Vorrichtung nach Anspruch 2, dadurch gekennzeichnet, daß die Breite des Spalts (14) der Flüssigkeitszuleitung in der gleichen Größenordnung liegt wie jene der Spalte für die Gaszuführung.

4. Spritzvorrichtung mit einem nach unten gerichteten Strahl, nach einem der Ansprüche 1 bis 3, dadurch gekennzeichnet, daß das breite Ende des Trichters nach oben gerichtet ist, das Flüssigkeitszuleitungsrohr (32) horizontal und parallel im Abstand von dem breiten Ende des Trichters angeordnet ist, die Achse des Rohres in der Symmetrieebene (P) der Vorrichtung liegt, und daß die Öffnungen (33) für den Austritt von Flussigkeit gemäß der oberen Mantellinie des Rohres vorgesehen sind sowie die Flüssigkeit auf diese Weise über die Innenwände des Trichters herabrinnt.

5. Vorrichtung nach Anspruch 4, dadurch gekennzeichnet, daß die Breite des Spalts (14) der Flüssigkeitszuleitung derart bemessen ist, daß kein Zurückhalten von Flüssigkeit auftritt, und in der Weise ausgebildet ist, daß beim Beenden des Zustroms in das Flüssigkeitszuleitungsrohr (32), fast sofort ein Beenden des Spritzens erreicht wird.

6. Vorrichtung nach Anspruch 4 oder 5, dadurch gekennzeichnet, daß sie derart geneigt sein kann, daß ein Spritzen in Richtungen, die sich von der senkrechten Richtung von oben nach unten bis zu einer horizontalen Richtung erstrecken, sichergestellt ist, wobei ein Kanal vorgesehen sein kann, um die Flüssigkeit des Flüssigkeitszuleitungsrohrs (32) zum Innern des Trichters hin zu lenken.

7. Vorrichtung nach einem der Ansprüche 4 bis 6, dadurch gekennzeichnet, daß das Flüssigkeitszuleitungsrohr (32) in seinem unteren Abschnitt eine Führung (34) aufweist, die eine Kante in der Symmetrieebene (P) der Vorrichtung hat.

8. Vorrichtung nach einem der Ansprüche 4 bis 7, dadurch gekennzeichnet, daß eine Zuleitung (7) für Flüssigkeit an dem breiten Ende des Trichters befestigt ist.

9. Spritzvorrichtung mit einem nach oben gerichteten Strahl, gemäß Anspruch 1, dadurch gekennzeichnet, daß das breite Ende des Trichters nach unten gerichtet und dichtend an der oberen Oberfläche des Flüssigkeitszuleitungsrohrs (35) oberhalb der Öffnungen (33) für das Austreten von Flüssikgeit befestigt ist.

10. Vorrichtung nach Anspruch 9, dadurch gekennzeichnet, daß sie derart geneigt sein kann, daß ein Spritzen in Richtungen, die sich von der senkrechten Richtung von unten nach oben bis zur horizontalen Richtung erstrecken, sichergestellt ist.

11. Spritzvorrichtung nach einem der vorstehenden Ansprüche, dadurch gekennzeichnet, daß die Spritzeinrichtung (6) von Formelementen mit konvergierenden Seitenwänden (12, 13) gebildet wird, die einen Trichter darstellen, dessen enger Abschnitt einen durchgehenden oder unterbrochenen Spalt (14) aufweist, und die Ränder des Spalts (14) mit einer Krempe (15, 16) ausgestattet sind, die von Öffnungen (17, 18) durchbrochen sind, deren Achsen schräg zu der Symmetrieachse (P) liegen und in vor dem Spalt (14) liegenden Punkten zusammenlaufen, fluchtrecht mit einer Geraden, die parallel zum Ausgang des Spalts (14) verläuft, und der breite Abschnitt des Trichters nach außen Befestigungsflansche (19, 20) zum Befestigen an der Leitung (7) oder dem Flüssigkeitszuleitungsrohr (35) trägt, sowie Verstärkungsteile (23, 24) vorgesehen sind, die sich senkrecht zur Symmetrieachse (P) außen an den Außenseiten (12, 13) des Trichters zwischen den Krempen (15, 16) des Spritzkopfes und den Befestigungsflanschen (19, 20) an den Rändern des breiten Abschnitts des Trichters sowie im Innern zwischen den Innenseiten des Trichters erstrecken, und Anschlußplatten (25) an den Enden der Elemente vorgesehen sind, die dichtend die Spritzeinrichtung (6) verschließen und ein Zusammensetzen mit benachbarten Elementen zur Ausbildung einer schiefen Ebene erlauben.

7

FIG.: 1

0 214 208

FIG.: 2

FIG.: 6

FIG.: 4

2

FIG.: 3

FIG.: 5